(19) Europäisches Patentamt
European Patent Office
Office européen des brevets

(11) **EP 3 645 148 B1**

(12) **EUROPÄISCHE PATENTSCHRIFT**

(45) Veröffentlichungstag und Bekanntmachung des Hinweises auf die Patenterteilung:
**24.08.2022   Patentblatt 2022/34**

(21) Anmeldenummer: **18728101.9**

(22) Anmeldetag: **28.05.2018**

(51) Internationale Patentklassifikation (IPC):
**B01F 23/235** *(2022.01)*     **B01F 25/452** *(2022.01)*

(52) Gemeinsame Patentklassifikation (CPC):
**B01F 23/235; B01F 25/45241; B01F 25/45242**

(86) Internationale Anmeldenummer:
**PCT/EP2018/063897**

(87) Internationale Veröffentlichungsnummer:
**WO 2019/001863 (03.01.2019 Gazette 2019/01)**

(54) **FAHRZEUGBEHANDLUNGSEINRICHTUNG MIT EINER SCHAUMERZEUGUNGSEINRICHTUNG**

VEHICLE-TREATMENT DEVICE WITH A FOAM GENERATOR

DISPOSITIF DE TRAITEMENT DE VÉHICULE AVEC UN DISPOSITIF DE PRODUCTION DE MOUSSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2017   DE 102017114582**

(43) Veröffentlichungstag der Anmeldung:
**06.05.2020   Patentblatt 2020/19**

(73) Patentinhaber: **WashTec Holding GmbH 86153 Augsburg (DE)**

(72) Erfinder:
• **Dr. SATTLER, Andreas 81543 München (DE)**
• **MAYER, Stefan 86356 Neusäss (DE)**

(74) Vertreter: **Winter, Brandl - Partnerschaft mbB Alois-Steinecker-Straße 22 85354 Freising (DE)**

(56) Entgegenhaltungen:
**DE-C- 710 892     JP-A- H0 857 278 US-A- 4 297 860**

EP 3 645 148 B1

**Beschreibung**

Die Erfindung betrifft eine Fahrzeugbehandlungseinrichtung mit einer Schaumerzeugungseinrichtung (auch als Schaumgenerator oder Schaumreaktor bezeichnet) mit einer Schaumerzeugungskammer, die eine poröse Füllstoffmatrix enthält, und bezieht sich vorzugsweise auf eine Schaumerzeugungseinrichtung zur Erzeugung von Waschschaum.

In Fahrzeugbehandlungseinrichtungen werden derzeit Schaumerzeugungseinrichtungen, insbesondere zur Erzeugung von Waschschaum, eingesetzt, die als Schaumerzeugungskammer einen länglichen Hohlkörper aufweisen, welcher mit einem porösen Material wie beispielsweise einem Fasergestrick oder einer Partikelschüttung gefüllt ist und welcher von einem Gemisch aus Gas und flüssiger Waschsubstanz durchströmt wird. Dabei werden die Gemischkomponenten vertikal von unten nach oben auf das poröse Füllmaterial zur Schaumerzeugung aufgeströmt, sodass beim Durchströmen des Füllmaterials eine Vermischung der Gemischkomponenten zu einem Schaum stattfindet, der an einer vorgesehenen Austrittsstelle aus dem Schaumgenerator austritt.

Beispielsweise zeigt die Druckschrift WO 2017/041781 A1 einen Schaumerzeuger, insbesondere für eine Kraftfahrzeugwaschanlage, der eine Schaumerzeugungskammer mit einem Einlass für Wasser, Tensid und Gas und einem Auslass für Schaum aufweist und eine für Fluide durchlässige Schüttung enthält. Dabei füllt die Schüttung die Schaumerzeugungskammer so weit aus, dass eine Fluidisierung der Schüttung nicht möglich ist.

Die Druckschrift GB 2 247 411 A offenbart ein Schaumerzeugungsgerät mit einer Kugelsäule, auf die über einen Injektor eine Mischung aus Gas und schäumbarer Flüssigkeit unter Druckausübung aufgegeben wird. Der gewundene Kanal durch die Matrix der Kugelsäule stellt einen fein strukturierten Schaum bereit, der über einen Applikatorkopf auf die Zieloberfläche aufgebracht werden kann.

Die Druckschrift DE 34 25 078 A1 betrifft einen Schaumgenerator zum Erzeugen von Schaum aus Wasser, einem Gas und Schaumbildnern mit Zuführeinrichtungen für die Komponenten zu dem Schaumgenerator, einer Austrittsleitung zur Zuführung des Schaums zu einer Austrittsmündung an einer Verwendungsstelle und durchlässigen Trennelementen, die in Strömungsrichtung zwischen dem Eintritts- und Austrittsteil des Schaumgenerators angeordnet sind.

Im Stand der Technik ist es jedoch immer von Nachteil, dass bei Schaumerzeugungseinrichtungen für große Volumina das Durchflussvolumen einer mit Partikeln, beispielsweise Kugeln, gefüllten Schaumerzeugungskammer nicht beliebig erhöht werden kann, da mit der axialen Verlängerung der Schaumerzeugungskammer auch der Druckwiderstand erheblich steigt. Auch kann aufgrund begrenzten Bauraums der Durchmesser der Schaumerzeugungskammer nicht beliebig verbreitert werden. Eine Befüllung mit Fasergestrick, beispielsweise Filz, Textil oder sonstigem Wirrgut, ermöglicht zwar eine Vergrößerung der Durchflussmenge, eine Verlängerung der axialen Strömungsstrecke führt jedoch zu einer Entmischung der schaumbildenden Komponenten, also einem Zerfall des bereits gebildeten Schaums, sodass die Verwendung von Fasergestrick nur an einem bestimmten Betriebspunkt bzw. einer bestimmten Länge der Schaumerzeugungskammer optimal funktioniert. Die mangelhafte Stabilität des Schaums ist insbesondere darin begründet, dass die Poren bzw. Kanäle im Füllstoff der Schaumerzeugungskammer, auf die axiale Länge der Schaumerzeugungskammer betrachtet, in ihrem Durchmesser variieren. Poren im Füllstoff der Schaumerzeugungskammer, welche in Strömungsrichtung der schäumbaren Mischung breiter werden, führen zu einer Entmischung des schäumbaren Gemischs, was mit einer teilweisen Auflösung von Schaumblasen einhergeht und damit einen teilweisen Zerfall des bereits gebildeten Schaums zur Folge hat.

Es ist daher die Aufgabe der vorliegenden Erfindung, die Nachteile aus dem Stand der Technik zu vermeiden oder wenigstens zu mildern und eine Schaumerzeugungseinrichtung für große Durchflussvolumina zu schaffen, der die Stabilität des gebildeten Schaums erhöht.

Diese Aufgabe wird erfindungsgemäß durch die Merkmalskombination des Anspruch 1 gelöst. Vorteilhafte Weiterbildungen der Erfindung sind Gegenstand der beigefügten Unteransprüche.

US 4,297,860 A offenbart eine Vorrichtung, die eine Mischkammer, einen Schaumerzeuger mit mehreren mit Kugeln gefüllten Kammern und einen Applikator mit einer mit Kugeln gefüllten Kammer aufweist, wobei der Kugeldurchmesser in Strömungsrichtung zunächst abnimmt und anschließend zunimmt.

JPH 0857278 A offenbart eine Atomisierungsvorrichtung zum Erzeugen von Suspensionen und Emulsionen.

DE 710 892 A betrifft einen Feuerlöscher mit mehreren mit Kugeln gefüllten Kammern.

Ein Grundgedanke der Erfindung besteht somit darin, eine Fahrzeugbehandlungseinrichtung mit einer Schaumerzeugungskammer zu schaffen, deren Porenstruktur in der Füllstoffmatrix bzw. im Füllmaterial derart gestaltet ist, dass eine Entmischung der schäumbaren Mischung unterbunden und das schäumbare Gemisch beim Durchströmen des Füllmaterials im Strömungsverlauf feiner geschert wird. Anders ausgedrückt soll in der Schaumerzeugungskammer der Schaumerzeugungseinrichtung der Fahrzeugbehandlungseinrichtung ein Füllmaterial bereitgestellt werden, welches aus dem schäumbaren Gemisch einen Schaum mit sich in Strömungsrichtung verkleinernden Schaumblasen erzeugt. Das Füllmaterial besteht aus einer Füllstoffmatrix und den das Füllmaterial durchziehenden Poren bzw. Kanälen. Unter Füllstoffmatrix ist hier der Festkörper des Füllmaterials zu verstehen, also der Teil des Füllmaterials, der nicht den Hohlraum bzw. die Poren darstellt, sondern diese umschließt bzw. bildet.

Es wird im Konkreten vorgeschlagen, dass die Porengröße bzw. der Porendurchmesser einer Querschnittsfläche des Füllstoffmaterials über die axiale Länge der Schaumerzeugungskammer abnimmt, um die Blasengröße des erzeugten Schaums über die Länge der Schaumerzeugungskammer zu verringern, sodass bei Austritt des Schaums aus der Schaumerzeugungskammer eine Zielgröße der Schaumblasen erreicht ist. Dabei kann die Füllstoffmatrix bzw. das Füllmaterial stufenweise, also mehrstufig, aufgebaut sein. Dabei folgen die Stufen idealerweise abstandslos hintereinander und der Porendurchmesser der Stufen in Strömungsrichtung des schäumbaren Gemischs nimmt ab. Die Schaumerzeugungseinrichtung der erfindungsgemäßen Fahrzeugbehandlungseinrichtung weist bevorzugt einen Durchmesser von 30mm bis 50mm, besonders bevorzugt einen Durchmesser von 34mm bis 46mm und außerordentlich bevorzugt einen Durchmesser von 42mm auf. Der Innendurchmesser der Schaumerzeugungskammer beträgt bevorzugt 15mm bis 35mm, besonders bevorzugt 21mm bis 29mm und außerordentlich bevorzugt 24mm. Die Länge der Schaumerzeugungskammer beträgt bevorzugt 50mm bis 250mm, besonders bevorzugt 120mm bis 180mm und besonders bevorzugt 150mm.

Insgesamt werden erfindungsgemäß Vorteile dahingehend erzielt, dass durch die kontinuierlich oder stufenweise verkleinerten Schaumblasen die Stabilität des erzeugten Schaums erhöht wird, während ein betriebslimitierender Druckwiderstand bei längeren Schaumerzeugungskammern vermieden wird, indem die beim Durchströmen des Gemischs durch das Füllmaterial erzeugte Schaumblasengröße nicht abrupt, sondern kontinuierlich oder in Stufen auf eine Zielgröße gebracht wird. Unter Druckwiderstand ist hier ein Druckwert zu verstehen, der sowohl von der Länge der Strömungsstrecke des Gemischs als auch von dem Porendurchmesser des Füllmaterials an der Eintrittsstelle des Gemischs in die Schaumerzeugungskammer abhängig ist, und der aufgewendet werden muss, um den Strömungswiderstand bzw. den Fließwiderstand des Gemischs durch das Füllmaterial zu überwinden. Je kleiner der Durchmesser der zu durchströmenden Poren ist, desto größer ist der Druckwiderstand. Durch eine kontinuierliche oder graduell bzw. stufenartig oder sprunghaft zunehmende Porenverengung wird auch der Druckwiderstand kontinuierlich oder graduell zunehmend aufgebaut und erreicht erst an der Position bzw. der Stufe seinen höchsten Wert, an der Porendurchmesser auf einen Zielwert gebracht ist. Die zu durchströmende Strecke durch die Poren des kleinsten Durchmessers fällt im Vergleich zum Stand der Technik, in der kein Porengradient vorgesehen ist, klein aus, sodass der Druckwiderstand ebenfalls vergleichbar klein ausfällt.

Die Aufgabe wird somit gelöst durch eine Fahrzeugbehandlungseinrichtung mit einer Schaumerzeugungseinrichtung, beispielsweise einer Wasch- oder Poliereinrichtung, mit einer Schaumerzeugungskammer, die ein poröses Füllmaterial insbesondere ein Wirrgut bzw. eine Poren umschließende Füllstoffmatrix aufweist oder aus diesem Füllmaterial besteht, wobei die mittlere Porengröße bzw. der mittlere Porendurchmesser einer Querschnittsfläche des Füllmaterials in axialer Richtung der Schaumerzeugungskammer über die gesamte axiale Länge der Schaumerzeugungskammer von einem Ende der Schaumerzeugungskammer (dem einem Zulauf und/oder einem Einströmabschnitt zugewandten Ende) zum anderen Ende der Schaumerzeugungskammer (dem einem Auslass bzw. einer Schaumaustrittsöffnung zugewandten Ende) hin kontinuierlich und/oder mehrstufig, insbesondere in zumindest zwei Stufen, bevorzugt in mindestens drei Stufen und besonders bevorzugt in mindestens fünf Stufen, graduell bzw. diskret abnimmt (und an keiner Stelle zwischen Einlass und Auslass zunimmt, sondern allenfalls abschnittsweise gleich bleibt). Das Füllmaterial weist ein Fasergestrick, insbesondere ein Kunststofffasergestrick auf und besteht in axialer Richtung der Schaumerzeugungskammer aus mehreren unmittelbar hintereinander, im Wesentlichen abstandslos angeordneten Abschnitten, deren Querschnittsflächen sich in ihrem mittleren Porendurchmesser unterscheiden.

In anderen Worten ausgedrückt unterbleibt eine Zunahme des mittleren Porendurchmessers einer Querschnittsfläche der Füllstoffmatrix zwischen den beiden Enden der Schaumerzeugungskammer, während auf zumindest einem Abschnitt zwischen den beiden Enden der Schaumerzeugungskammer der mittlere Porendurchmesser kleiner wird. Insbesondere zählen die beiden Enden der Schaumerzeugungskammer zu den Intervallgrenzen- bzw. zu den Abschnittsbereichen dazu. Es ist also möglich, dass zwischen den beiden Enden der Schaumerzeugungskammer einschließlich der beiden Enden der Schaumerzeugungskammer der mittlere Porendurchmesser kontinuierlich oder graduell in mindestens zwei Stufen bzw. Sprüngen kleiner wird. Dabei können der Schaumgenerator und/oder die Schaumerzeugungskammer starr oder moderat flexibel ausgeführt sein.

Vorteilhafterweise wird dadurch eine stabile Schaumblasenbildung in Zielgröße der Schaumblasen erreicht, ohne einen limitierenden Druckwiderstand zu erreichen.

Die Aufgabe wird auch durch eine gattungsgemäße Fahrzeugbehandlungseinrichtung mit einer Schaumerzeugungseinrichtung gelöst, dessen Füllmaterial(en) so gewählt ist oder angeordnet sind, dass vom Einlass zum Auslass hin das Verhältnis von Druckwiderstand und Querschnittsfläche kontinuierlich und/oder diskret, insbesondere zwei- oder dreistufig, zunimmt.

Das Füllmaterial weist ein Fasergestrick, insbesondere ein Kunststofffasergestrick wie beispielsweise Polypropylen-Gestrick, auf, dessen mittlerer Porendurchmesser bzw. mittlere Maschenweite vom Einlass zum Auslass hin kontinuierlich und/oder diskret, insbesondere zwei- oder dreistufig, abnimmt. Es ist auch möglich, dass die Füllstoffmatrix aus Kunststofffasergestrick wie beispielsweise Polypropylen-Gestrick besteht.

Dabei besteht die Füllstoffmatrix bzw. das Füllmaterial in axialer Richtung der Schaumerzeugungskammer aus mehreren unmittelbar hintereinander, im Wesentlichen abstandslos, angeordneten Abschnitten, deren Querschnittsflächen sich in ihrem mittleren Porendurchmesser unterscheiden.

Dadurch wird vorteilhafterweise ein einfacher Aufbau bzw. Zusammenbau der Füllstoffmatrix bzw. des Füllmaterials erreicht, da mehrere Abschnitte unterschiedlichen Querschnitts unmittelbar hintereinander gereiht werden können, um über die Gesamtlänge der Schaumerzeugungskammer betrachtet einen Gradienten im mittleren Porendurchmesser zu erzielen. Die Dichte der Aneinanderreihung ist insbesondere wichtig, da ein Abstand zwischen den Abschnitten einer Porenvergrößerung entspricht und zu einer Destabilisierung bzw. teilweisen Auflösung des Schaums führt.

Besonders bevorzugt sind die Poren einer Querschnittsfläche des Füllmaterials im Wesentlichen gleich groß.

Da die Stabilität eines Schaums von der Homogenität des Schaumbilds abhängig ist, führt eine homogene Schaumbildung in Form gleich großer Blasen zu einer erhöhten Stabilität des Schaums im Vergleich zu einem inhomogen strukturierten Schaum mit unterschiedlich großen Schaumblasen. Im Wesentlichen gleich große Poren in einer Querschnittsfläche führen somit zu einer homogenen Scherung des schäumbaren Gemischs, was vorteilhafterweise eine homogene Schaumblasenbildung mit erhöhter Stabilität des Schaums zur Folge hat.

Um dies zu erreichen kann insbesondere die Porosität des Füllmaterials vom Einlass zum Auslass hin kontinuierlich und/oder diskret, insbesondere zwei- oder dreistufig, abnehmen.

Unter Porosität ist hier das Verhältnis aus dem Hohlvolumen eines Körpers (Gesamtvolumen der Poren eines Abschnitts des Füllmaterials) und dem Gesamtvolumen des Körpers (Volumen des gesamten Abschnitt des Füllmaterials, also Porenvolumen und Volumen der Füllstoffmatrix zusammen) zu verstehen bzw. das Verhältnis aus der Durchtrittsfläche einer Fläche (Gesamtporenfläche in der Querschnittsfläche des Füllmaterials) und der Gesamtfläche der Fläche (gesamte Querschnittsfläche des Füllmaterials, also Gesamtporenfläche und Füllstoffmatrixfläche zusammen):

$$\varepsilon_V = V_{Poren} \,/\, V_{gesamt} = V_{Poren} \,/\, (V_{Poren} + V_{Matrix})$$

$$\varepsilon_A = A_{Poren} \,/\, A_{gesamt} = A_{Poren} \,/\, (A_{Poren} + A_{Matrix})$$

Hierbei ist die offene Porosität gemeint, bei der verschlossene, für das durchströmende Fluid nicht zugängliche Poren außer Betracht bleiben.

Eine Möglichkeit zur Erhöhung des Strömungswiderstands bzw. zur Senkung der Porosität ist die Verkleinerung der Durchtrittsflächen der Querschnittsflächen des Füllmaterials in axialer Richtung der Schaumerzeugungskammer. Eine weitere Möglichkeit liegt in der Beibehaltung der Durchtrittsflächen der Querschnittsflächen und der Erhöhung der Anzahl der Durchtrittskanäle in den Querschnittsflächen, wobei der Durchmesser der Durchtrittskanäle verkleinert wird und es somit zu einer Zunahme des Strömungswiderstands in Form von erhöhten Kapillarkräften kommt.

Somit wird vorteilhafterweise verhindert, dass es in der Schaumerzeugungskammer in Strömungsrichtung zu einem Druckabfall kommt, was zu einer Destabilisierung des Schaums führt.

Außerdem bevorzugt ist stromaufwärts des Füllmaterials eine Blende angeordnet, mit der das schäumbare Gemisch vorteilhafterweise vorvermischt werden kann. Die Blende kann somit eine Vorstufe darstellen.

Kurzbeschreibung der Figuren

Die Erfindung wird nachfolgend mit Hilfe einer Zeichnung erläutert. Es zeigen:

Fig. 1 einen Längsschnitt durch ein erstes Ausführungsbeispiel einer Schaumerzeugungseinrichtung einer erfindungsgemäßen Fahrzeugbehandlungseinrichtung

Fig. 2 einen Querschnitt durch das Füllmaterial einer Schaumerzeugungseinrichtung einer erfindungsgemäßen Fahrzeugbehandlungseinrichtung des ersten Ausführungsbeispiels entlang der Schnittlinie II der Fig. 1

Fig. 3 einen Querschnitt durch das Füllmaterial einer Schaumerzeugungseinrichtung einer erfindungsgemäßen Fahrzeugbehandlungseinrichtung des ersten Ausführungsbeispiels entlang der Schnittlinie III der Fig. 1

Fig. 4 einen Querschnitt durch das Füllmaterial einer Schaumerzeugungseinrichtung einer erfindungsgemäßen Fahrzeugbehandlungseinrichtung des ersten Ausführungsbeispiels entlang der Schnittlinie IV der Fig. 1

Fig. 5 eine grafische Darstellung des mittleren Porendurchmessers über die Länge der Schaumerzeugungskammer einer Schaumerzeugungseinrichtung einer erfindungsgemäßen Fahrzeugbehandlungseinrichtung des ersten Ausführungsbeispiels

Fig. 6 einen Längsschnitt durch ein zweites Ausführungsbeispiel einer Schaumerzeugungseinrichtung einer erfindungsgemäßen Fahrzeugbehandlungseinrichtung

Fig. 7 einen Querschnitt durch das Füllmaterial einer Schaumerzeugungseinrichtung einer erfindungsgemäßen Fahrzeugbehandlungseinrichtung des zweiten Ausführungsbeispiels entlang der Schnittlinie VII der Fig. 6

Fig. 8 einen Querschnitt durch das Füllmaterial einer Schaumerzeugungseinrichtung einer erfindungsgemäßen Fahrzeugbehandlungseinrichtung des zweiten Ausführungsbeispiels entlang der Schnittlinie VIII der Fig. 6

Fig. 9 einen Querschnitt durch das Füllmaterial einer Schaumerzeugungseinrichtung einer erfindungsgemäßen Fahrzeugbehandlungseinrichtung des zweiten Ausführungsbeispiels entlang der Schnittlinie IX der Fig. 6

Fig. 10 eine grafische Darstellung des mittleren Porendurchmessers über die Länge der Schaumerzeugungskammer einer Schaumerzeugungseinrichtung einer erfindungsgemäßen Fahrzeugbehandlungseinrichtung des zweiten Ausführungsbeispiels

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

Detaillierte Beschreibung bevorzugter Ausführungsbeispiele

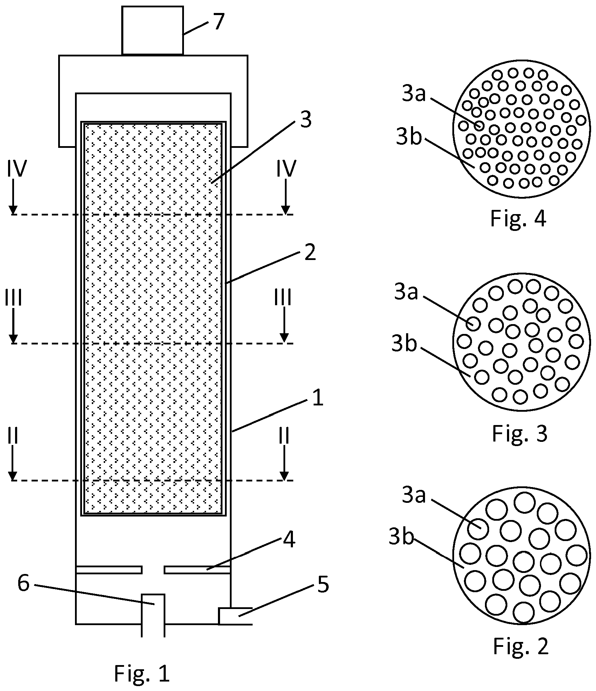

Fig. 1 zeigt einen Längsschnitt durch ein erstes Ausführungsbeispiel einer Schaumerzeugungseinrichtung 1 einer erfindungsgemäßen Fahrzeugbehandlungseinrichtung. Darin ist eine Schaumerzeugungseinrichtung 1 zu sehen, die eine beispielsweise zylindrisch oder prismaförmig aufgebaute Schaumerzeugungskammer 2 mit einem porösen Füllmaterial 3 enthält. Unterhalb der Schaumerzeugungskammer 2 ist eine Blende 4 angeordnet. Durch einen am unteren Abschnitt der Schaumerzeugungseinrichtung 1 angeordneten Zulauf 5 wird eine schäumbare flüssige Komponente, die beispielsweise aus einem mit (Leitungs-)Wasser verdünntem Detergens bestehen kann oder dieses enthält, in die Schaumerzeugungseinrichtung 1 eingespeist. Durch einen am unteren Abschnitt der Schaumerzeugungseinrichtung 1 angeordneten Einströmabschnitt 6 wird eine gasförmige Komponente, beispielsweise Luft oder Pressluft, in die Schaumerzeugungseinrichtung 1 eingeleitet. Die Zufuhr von flüssiger Komponente, nachfolgend Flüssigkeit genannt, und gasförmiger Komponente, nachfolgend Gas genannt, erfolgt gegebenenfalls unter Aufwendung von Druck, beispielsweise durch eine Pumpe. Die der Schaumerzeugungseinrichtung 1 zugeführte Flüssigkeit und das zugeführte Gas durchströmen die Blende 4, was zu einer Vorvermischung der Flüssigkeit und des Gases führt, bevor das Gemisch aus Flüssigkeit und Gas, nachfolgend Gemisch genannt, in die Schaumerzeugungskammer 2 einströmt. Die der Blende 4 zugewandte äußerste Fläche des Füllmaterials 3 kann auch als Einströmstelle für das Gemisch in die Schaumerzeugungskammer 2 bezeichnet werden. Im oberen Abschnitt des Schaumgenerators 1 und oberhalb der Schaumerzeugungskammer 2 ist ein Auslass 7 bzw. eine Schaumaustrittsöffnung angeordnet. Die dem Auslass 7 zugewandte äußerste Fläche des Füllmaterials 3 kann auch als Ausströmstelle für das Gemisch aus der Schaumerzeugungskammer 2 bezeichnet werden. Die Schaumerzeugungskammer 2 ist mit einem Füllmaterial 3 ausgestattet, dessen mittlerer Porendurchmesser $P_m$ sich in Strömungsrichtung des Gemischs über die axiale Länge der Schaumerzeugungskammer 2 verengt. In diesem ersten Ausführungsbeispiel wird der mittlere Porendurchmesser $P_m$ des Füllmaterials 3 kontinuierlich, also in jedem beliebigen Intervall zwischen der Einströmstelle und der Ausströmstelle, verkleinert. Beim Durchströmen des Gemischs durch das Füllmaterial 3 bzw. durch die Poren des Füllmaterials 3 wird das Gemisch geschert und es bilden sich Schaumblasen, deren Durchmesser über die axiale Länge der Schaumerzeugungskammer 2 aufgrund der kontinuierlichen Porenverengung abnimmt. Der mittlere Porendurchmesser $P_m$ des Füllmaterials 3 ist am oberen Ende der Schaumerzeugungskammer 2 so ausgelegt, dass die Schaumblasen des Gemischs auf einen Zieldurchmesser gebracht werden. An dem Auslass 7 des Schaumgenerators 1 tritt das Gemisch in Form eines stabilen Schaums aus dem Schaumgenerator 1 aus.

Die Fig. 2 bis 4 zeigen jeweils einen Querschnitt durch das Füllmaterial der Schaumerzeugungseinrichtung 1 des ersten Ausführungsbeispiels entlang der Schnittlinien II bis IV der Fig. 1. Wie in den Fig. 2 bis 4 zu sehen, nimmt der Durchmesser der Poren 3a des Füllmaterials 3 von der Einströmstelle aus in Richtung der Ausströmstelle ab. Die Poren 3a sind von einer Füllstoffmatrix 3b umgeben und bilden gemeinsam das Füllmaterial 3.

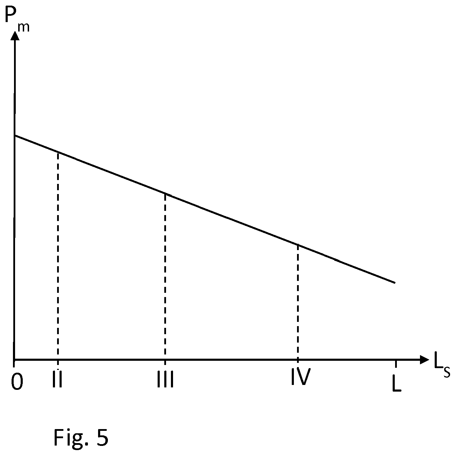

Fig. 5 zeigt eine grafische Darstellung des mittleren Porendurchmessers $P_m$ über die Länge $L_s$ der Schaumerzeugungskammer 2 einer Schaumerzeugungseinrichtung 1 einer erfindungsgemäßen Fahrzeugbehandlungseinrichtung des ersten Ausführungsbeispiels. In diesem Ausführungsbeispiel nimmt der mittlere Porendurchmesser $P_m$ über die axiale Länge $L_s$ der Schaumerzeugungskammer 2 von der Einströmstelle zur Ausströmstelle hin kontinuierlich ab. Die Position "0" entspricht der Einströmstelle und die Position "L" der Ausströmstelle an der Schaumerzeugungskammer 2.

Mit den gestrichelten Linien sind die Querschnittspositionen der in den Fig. 2 bis 4 gezeigten und in der Fig. 1 ebenfalls mit gestrichelten Linien angedeuteten Querschnitte des Füllmaterials 3 angegeben. Der mittlere Porendurchmesser $P_m$ an der Position "L" entspricht einem Zieldurchmesser, mit dem die Schaumblasen des Gemischs auf eine Zielgröße gebracht werden.

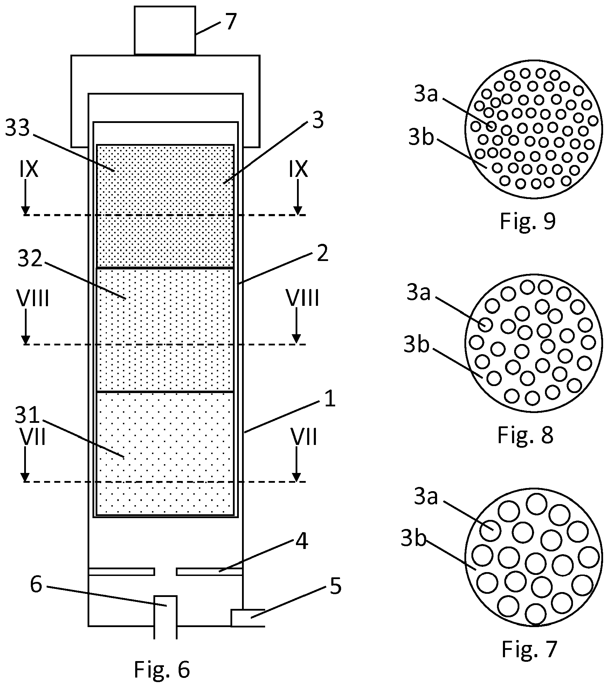

In Fig. 6 ist ein Längsschnitt durch ein zweites Ausführungsbeispiel einer Schaumerzeugungseinrichtung 1 einer erfindungsgemäßen Fahrzeugbehandlungseinrichtung gezeigt. Das zweite Ausführungsbeispiel gleicht dem ersten Ausführungsbeispiel im Grundaufbau und unterscheidet sich vom ersten Ausführungsbeispiel dahingehend, dass die Schaumerzeugungskammer 2 drei Abschnitte mit jeweils unterschiedlichem mittlerem Porendurchmesser $P_m$ aufweist. In diesem zweiten Ausführungsbeispiel wird der mittlere Porendurchmesser $P_m$ über die axiale Länge $L_s$ der Schaumerzeugungskammer 2 von der Einströmstelle zur Ausströmstelle hin graduell, also in Stufen (mehrstufig), verkleinert. Der untere Abschnitt 31 des Füllmaterials 3 weist einen großen mittleren Porendurchmesser $P_m$, der mittlere Abschnitt 32 des Füllmaterials 3 weist einen mittelgroßen mittleren Porendurchmesser $P_m$ und der obere Abschnitt 33 des Füllmaterials 3 weist einen kleinen Porendurchmesser $P_m$ auf. Als mittelgroßer mittlerer Porendurchmesser $P_m$ ist ein mittlerer Porendurchmesser $P_m$ zu verstehen, der kleiner ist als der mittlere Porendurchmesser $P_m$ des unteren Abschnitts 31 und größer ist als der mittlere Porendurchmesser $P_m$ des oberen Abschnitts 33.

Die Fig. 7 bis 9 zeigen jeweils einen Querschnitt durch das Füllmaterial 3 der Schaumerzeugungskammer 2 in den einzelnen Abschnitten 31 bis 33 des Füllmaterials 3. Dabei ist zu sehen, dass der Durchmesser der Poren 3a des Füllmaterials 3 vom unteren Abschnitt 31 zum oberen Abschnitt 33 hin abnimmt.

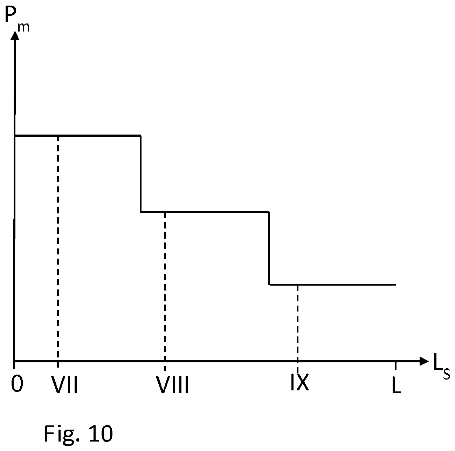

In Fig. 10 ist der mittlere Porendurchmesser $P_m$ über die Länge $L_s$ der Schaumerzeugungskammer 2 der Schaumerzeugungseinrichtung 1 des zweiten Ausführungsbeispiels grafisch dargestellt. In diesem Ausführungsbeispiel nimmt der mittlere Porendurchmesser $P_m$ über die axiale Länge $L_s$ der Schaumerzeugungskammer 2 von der Einströmstelle zur Ausströmstelle hin stufenweise ab. Die Position "0" entspricht der Einströmstelle und die Position "L" der Ausströmstelle an der Schaumerzeugungskammer 2. Mit den gestrichelten Linien sind die Querschnittspositionen der in den Fig. 7 bis 9 gezeigten und in der Fig. 6 ebenfalls mit gestrichelten Linien angedeuteten Querschnitte des Füllmaterials 3 in den Abschnitten 31 bis 33 angegeben. Der mittlere Porendurchmesser $P_m$ an der Position "L" entspricht einem Zieldurchmesser, mit dem die Schaumblasen des Gemischs auf eine Zielgröße gebracht werden.

Bezugszeichenliste

| | |
|---|---|
| 1 | Schaumerzeugungseinrichtung |
| 2 | Schaumerzeugungskammer |
| 3 | Füllmaterial |
| 3a | Poren |
| 3b | Füllstoffmatrix |
| 4 | Blende |
| 5 | Zulauf / Einlass |
| 6 | Einströmabschnitt / Einlass |
| 7 | Auslass |
| 31 | unterer Abschnitt des Füllmaterials |
| 32 | mittlerer Abschnitt des Füllmaterials |
| 33 | oberer Abschnitt des Füllmaterials |
| $P_m$ | mittlerer Porendurchmesser |
| $L_s$ | Länge der Schaumerzeugungskammer |

**Patentansprüche**

1. Fahrzeugbehandlungseinrichtung mit einer Schaumerzeugungseinrichtung (1), mit einer Schaumerzeugungskammer (2), die ein poröses Füllmaterial (3), insbesondere ein Wirrgut, enthält oder aus diesem besteht und die zumindest einen Einlass (5, 6) zum Zuführen einer Flüssigkeit und eines Gases sowie einen Auslass (7) zum Abführen des in der Schaumerzeugungskammer (2) erzeugten Schaums aufweist,

   **dadurch gekennzeichnet, dass**
   der mittlere Porendurchmesser ($P_m$) einer Querschnittsfläche des Füllmaterials (3) vom Einlass (5, 6) zum Auslass (7) hin kontinuierlich und/oder diskret, insbesondere zwei- oder dreistufig, abnimmt, wobei das Füllmaterial (3) ein Fasergestrick, insbesondere ein Kunststofffasergestrick, aufweist und in axialer Richtung der Schaumerzeugungskammer (1) aus mehreren unmittelbar hintereinander, im Wesentlichen abstandslos, angeordneten Abschnitten (31, 32, 33) besteht, deren Querschnittsflächen sich in ihrem mittleren Porendurchmesser ($P_m$) unterscheiden.

2. Fahrzeugbehandlungseinrichtung nach Anspruch 1, **dadurch gekennzeichnet, dass** die Poren einer Querschnittsfläche des Füllmaterials (3) im Wesentlichen gleich groß sind.

3. Fahrzeugbehandlungseinrichtung nach einem der vorangehenden Ansprüche, **dadurch gekennzeichnet, dass** die Porosität des Füllmaterials (3) vom Einlass (5, 6) zum Auslass (7) hin kontinuierlich und/oder diskret, insbesondere zwei- oder dreistufig, abnimmt.

4. Fahrzeugbehandlungseinrichtung nach einem der vorangehenden Ansprüche, **dadurch gekennzeichnet, dass** stromaufwärts des Füllmaterials (3) eine Blende (4) angeordnet ist.

## Claims

1. A vehicle treatment device having a foam generator (1), comprising a foam generation chamber (2) which contains or consists of a porous filling material (3), especially a tangled material, and which has at least one inlet (5, 6) for supplying a liquid and a gas as well as an outlet (7) for discharging the foam generated in the foam generation chamber (2), **characterized in that**

   the mean pore diameter ($P_m$) of a cross-sectional area of the filling material (3) decreases from the inlet (5, 6) to the outlet (7) continuously and/or discretely, in particular in two or three stages, wherein
   the filling material (3) includes knitted fibers, especially knitted synthetic fibers,
   and the filling material (3) consists of a plurality of portions (31, 32, 33) arranged directly in series in the axial direction of the foam generation chamber (2), substantially without any spacing, the cross-sectional areas of which differ by their mean pore diameter ($P_m$).

2. The vehicle treatment device (1) according to claim 1, **characterized in that** the pores of a cross-sectional area of the filling material (3) are substantially equal.

3. The vehicle treatment device (1) according to any one of the preceding claims, **characterized in that** the porosity of the filling material (3) decreases continuously and/or discretely, especially in two or three stages, from the inlet (5, 6) to the outlet (7).

4. The vehicle treatment device (1) according to any one of the preceding claims, **characterized in that** a diaphragm (4) is arranged upstream of the filling material (3).

## Revendications

1. Appareil de traitement de véhicule avec un appareil de génération de mousse (1), avec une chambre de génération de mousse (2) qui contient un matériau de remplissage (3) poreux, en particulier un produit en vrac ou s'en compose et qui présente au moins une entrée (5, 6) pour l'apport d'un liquide et d'un gaz ainsi qu'une sortie (7) pour l'évacuation de la mousse générée dans la chambre de génération de mousse (2),
   **caractérisé en ce que** le diamètre poreux médian ($P_m$) d'une section du matériau de remplissage (3) diminue de l'entrée (5, 6) à la sortie (7) en continu et/ou de manière discrète, en particulier en deux ou trois étapes, dans lequel le matériau de remplissage (3) présente un tricot de fibres, en particulier un tricot de fibres synthétiques et dans le sens axial de la chambre de génération de mousse (1) se compose de plusieurs sections (31, 32, 33) agencées directement les unes derrière les autres sensiblement sans distance, dont les sections se distinguent dans leur diamètre poreux ($P_m$) médian.

2. Appareil de traitement de véhicule selon la revendication 1, **caractérisé en ce que** les pores d'une section du matériau de remplissage (3) sont sensiblement de même grandeur.

3. Appareil de traitement de véhicule selon l'une quelconque des revendications précédentes, **caractérisé en ce que** la porosité du matériau de remplissage (3) diminue de l'entrée (5, 6) à la sortie (7) en continu et/ou de manière discrète, en particulier en deux ou trois étapes.

4. Appareil de traitement de véhicule selon l'une quelconque des revendications précédentes, **caractérisé en ce qu'**un diaphragme (4) est agencé en amont du matériau de remplissage (3).

Fig. 1

Fig. 4

Fig. 3

Fig. 2

Fig. 5

Fig. 6

Fig. 9

Fig. 8

Fig. 7

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017041781 A1
- GB 2247411 A
- DE 3425078 A1
- US 4297860 A
- DE 710892 A